# EUROPÄISCHE PATENTSCHRIFT

(11) **EP 0 810 062 B1**
(45) Veröffentlichungstag und Bekanntmachung des Hinweises auf die Patenterteilung: **15.05.2002**
(21) Anmeldenummer: 97108784.6
(22) Anmeldetag: 02.06.1997
(51) Int. Cl.: B23Q 5/56

(54) **Antriebsaggregat**
Drive assembly
Ensemble d'entraînement

(30) Priorität: 31.05.1996 DE 19622060; 29.10.1996 EP 96117359
(43) Veröffentlichungstag der Anmeldung: 03.12.1997
(73) Patentinhaber: DECKEL MAHO GmbH, D-87459 Pfronten (DE)
(72) Erfinder: Lechleiter, Karl, 87466 Oy-Mittelberg (DE); Geissler, Alfred, 87459 Pfronten (DE)
(74) Vertreter: Beetz & Partner Patentanwälte

(56) Entgegenhaltungen:
- EP-A- 0 429 758
- DE-A- 2 835 973
- DE-A- 3 006 787
- DE-A- 3 704 787
- US-A- 2 924 151
- US-A- 4 714 388

## Beschreibung

Die Erfindung betrifft ein Antriebsaggregat zur Relativbewegung zweier Bauteile, insbesondere einer Werkzeugmaschine, mit einem Antriebsmotor und einer Getriebeanordnung mit zwei gegeneinander verspannbaren Getriebezügen, deren Abtriebsritzel gemeinsam mit einer Gegenverzahnung in Eingriff sind, wobei jeder Getriebezug ein hochübersetzendes Kompaktgetriebe mit mindestens einem Stellelement zum Verspannen der beiden Getriebezüge enthält.

Ein derartiges Antriebsaggregat ist aus der DE 37 04 787 A1 bekannt. Dort wird das Drehmoment von einem Antriebsmotor über ein Ritzel auf zwei damit kämmende Zahnräder übertragen. Diese Zahnräder sind auf je einer Eingangswelle zweier Normgetriebe mit hohem Über- oder Untersetzungsverhältnis aufgesteckt und damit über je einen in zueinander entgegengesetzter Drehrichtung wirkenden Freilauf gekoppelt. Von den Ausgangswellen der Normgetriebe wird das Drehmoment mit darauf sitzenden Zahnrädern auf ein mit der Abtriebswelle gekoppeltes Zahnrad übertragen.

Aufgabe der Erfindung ist es, ein Antriebsaggregat mit einem einfach verspannbaren Getriebe zu schaffen, das bei hoher Steifigkeit und Positioniergenauigkeit einen geringen Einbauraum erfordert.

Diese Aufgabe wird durch ein Antriebsaggregat mit den Merkmalen des Anspruchs 1 bzw. 6 gelöst.

Als hochübersetzende Kompaktgetriebe werden bei dem erfindungsgemäßen Antriebsaggregat sogenannte Cyclogetriebe verwendet. Diese zeichnen sich durch eine reibungsarme Kraftübertragung und eine hohe Übersetzung bei kleinstem Bauraum aus. Die Cyclogetriebe weisen außerdem eine hohe Verdrehsteifigkeit auf und bieten die Möglichkeit einer spielfreien Einstellung zur Erreichung einer hohen Positioniergenauigkeit. Die Stellelemente zum Verspannen der beiden Getriebezüge sind als lösbare Spannhülsen zur kraftschlüssigen Verbindung zwischen den Antriebsritzeln und den Antriebswellen der Cyclogetriebe ausgebildet. Mit Hilfe dieser Spannhülsen kann eine einfache Verspannung der beiden Getriebezüge dadurch erreicht werden, daß die Spannhülsen nach der Vorspannung des Zahnriemens zunächst entspannt werden, um die kraftschlüssige Verbindung zwischen den Antriebsritzeln und Antriebswellen der Cyclogetriebe zu lösen. Anschließend werden die beiden Antriebswellen bei feststehenden Antriebsritzeln solange gegeneinander verdreht, bis die Zähne der beiden Abtriebsritzel an entgegengesetzten Zahnflanken der Verzahnung am anzutreibenden Bauteil anliegen. In dieser Stellung werden die Spannhülsen erneut festgespannt und die beiden Getriebezüge in der gegeneinander verspannten Lage gehalten.

Um die gegenseitige Verdrehung der beiden Antriebswellen der Cyclogetriebe zur Verspannung beider Getriebezüge zu erleichtern, sind an den Antriebswellen zweckmäßigerweise Aufnahmeelemente zum Einsetzen entsprechender Verdrehwerkzeuge vorgesehen. Diese Aufnahmeelemente können z.B. an der Stirnseite der Antriebswellen eingeschraubte Innensechskantschrauben sein, über die die Antriebswellen mit entsprechenden Werkzeugen gegeneinander verdrehbar sind.

Die Erfassung der Winkellage des anzutreibenden Bauteils kann zweckmäßigerweise durch einen Drehgeber erfolgen, der bei kleiner Bauweise eine hohe Genauigkeit ermöglicht.

Das erfindungsgemäße Antriebsaggregat ist aufgrund seiner hohen Positioniergenauigkeit und Steifigkeit besonders gut als Antrieb für Rundtischsysteme oder für verschwenkbare Fräsköpfe von Werkzeugmaschinen geeignet. Weitere Einsatzmöglichkeiten ergeben sich überall dort, wo ein spielfreier Antrieb mit hoher Übersetzung bei kleinem Bauraum-gefordert ist. So kann das Antriebsaggregat in Verbindung mit einer Zahnstange auch zur Umsetzung in eine translatorische Bewegung, z.B. als Tisch- oder Supportantrieb, verwendet werden. Auch hier ist ein besonders reibungsarmer und steifer Antrieb mit hoher Positioniergenauigkeit erreichbar. Zur Realisierung größerer Verfahrbewegungen sind der Antriebsmotor und die beiden Cyclogetriebe zweckmäßigerweise in dem zu verfahrenden Bauteil angeordnet, während die Zahnstange an dem ortsfesten Bauteil angeordnet ist. Auch eine ungekehrte Anordnung ist besonders bei kleinen Verfahrwegen möglich.

Weitere Vorzüge und Besonderheiten des erfindungsgemäßen Antriebsaggregats ergeben sich aus der folgenden Beschreibung von Ausführungsbeispielen anhand der Zeichnung. Es zeigen:
- Fig. 1: einen Querschnitt durch einen Schwenkrundtisch einer Werkzeugmaschine mit erfindungsgemäßem Antriebsaggregat;
- Fig. 2: eine teilgeschnittene Seitenansicht des Schwenkrundtischs von Fig. 1;
- Fig. 3: eine Unteransicht des Antriebsaggregats für die Tischplatte des in Fig. 1 gezeigten Schwenkrundtischs;
- Fig. 4: eine Schnittansicht eines Cyclogetriebes;
- Fig. 5: eine teilgeschnittene Seitenansicht eines Einbaubeispiels des erfindungsgemäßen Antriebsaggregats zur translatorischen Bewegung eines Maschinenteils;
- Fig. 6: eine Seitenansicht einer Universal-Fräs- und Bohrmaschine mit teilweise aufgeschnittener Seitenwand; und
- Fig. 7: eine Schnittansicht eines Schwenkfräskopfes der in Fig. 6 gezeigten Universal-Fräs- und Bohrmaschine.

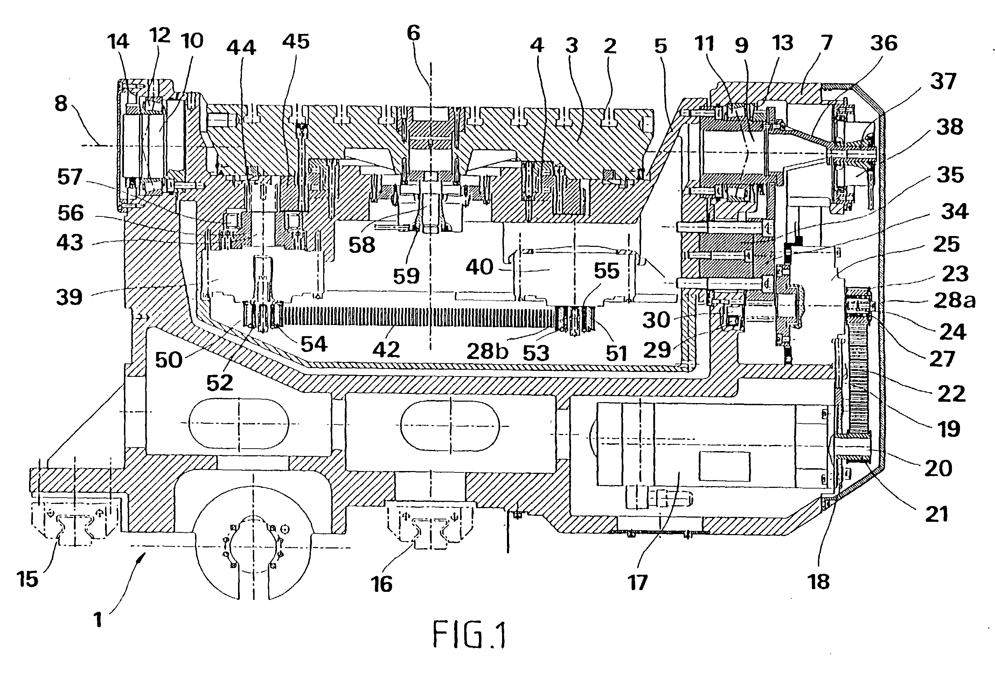

Der in Fig. 1 gezeigte Schwenkrundtisch 1 einer Werkzeugmaschine enthält eine mit Spannuten 2 versehene runde Tischplatte 3, die über eine Ringrollenlagerung 4 mit einer Kombination aus zwei verspannten Axialrollenlagern und einem Radialrollenlager in einem Gehäuse 5 um eine Vertikalachse 6 drehbar gelagert ist. Das Gehäuse 5 ist innerhalb eines Stützrahmens 7 um eine Horizontalachse 8 verschwenkbar. Hierzu sind an dem Gehäuse 5 zwei einander gegenüberliegende seitliche Lagerzapfen 9 und 10 befestigt, die über zwei gegeneinander verspannbare Kegelrollenlager 11 und 12 jeweils in seitlichen Lagerbohrungen 13 bzw. 14 des Stützrahmens 7 gelagert sind. Der Stützrahmen 7 ist über gestrichelt dargestellte parallele Führungsschienen 15 und 16 an seiner Unterseite und einen nicht dargestellten Kugelgewindetrieb auf einem Ständer der Werkzeugmaschine motorisch verfahrbar angeordnet.

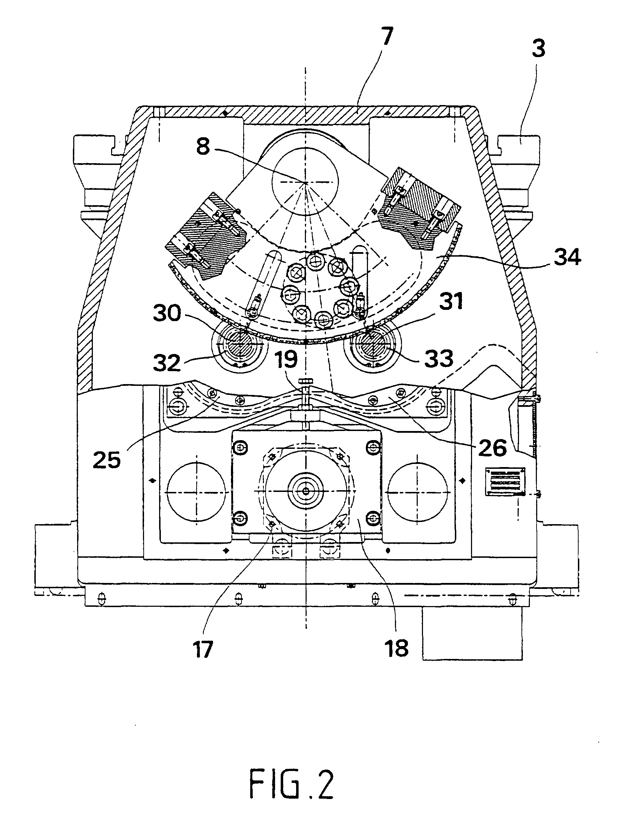

Die Verschwenkung des Gehäuses 5 innerhalb des Stützrahmens 7 und damit auch die Verschwenkung der Tischplatte 3 um die Horizontalachse 8 erfolgt durch einen Antriebsmotor 17 mit veränderbarer Drehzahl, der über eine Motorhalterung 18 durch eine Spannschraube 19 verstellbar am Stützrahmen 7 befestigt ist. Auf der Ausgangswelle 20 des Antriebsmotors 17 ist eine Riemenscheibe 21 für einen Zahnriemen 22 drehfest fixiert. Über den Zahnriemen 22 wird neben einem in Fig. 1 gezeigten Antriebsritzel 23 auf der Antriebswelle 24 eines ersten Cyclogetriebes 25 gleichzeitig ein weiteres Antriebsritzel auf der Antriebswelle eines in Fig. 2 gezeigten zweiten Cyclogetriebes 26 angetrieben. Die beiden Antriebsritzel sind jeweils über eine lösbare Spannbuchse 27 auf den Antriebswellen der jeweiligen Cyclogetriebe 25 bzw. 26 reibschlüssig gehalten. An den Stirnseiten der beiden Antriebswellen sind Stellschrauben 28a eingeschraubt. Auf den über jeweils ein Rollenlager 29 im Stützrahmen 7 drehbar gelagerten Abtriebswellen 30 und 31 der Cyclogetriebe 25 bzw. 26 sitzt jeweils ein Abtriebsritzel 32 bzw. 33, die beide mit einem Zahnradsegment 34 in Eingriff sind, wie dies in Fig. 2 gezeigt ist. Das Zahnradsegment 34 ist über ein Distanzstück 35 an der in Fig. 1 rechten Seitenwand des Gehäuses 5 unterhalb des Kegelrollenlagers 11 zur Horizontalachse 8 konzentrisch angeordnet. Über die beiden Cyclogetriebe 25 und 26 und das Zahnradsegment 34 kann die Tischplatte 3 durch den Antriebsmotor 17 um die Horizontalachse 8 verschwenkt werden.

Zur Erfassung einer bestimmten Schwenkstellung der Tischplatte 3 ist an dem in Fig. 1 rechten Lagerzapfen 9 ein Ansatz 36 angeflanscht, dessen freies zylindrisches Endteil 37 verdrehfest in einer Hohlwelle eines Drehgebers 38 angeordnet ist. Mit Hilfe des Drehgebers 38 ist eine genaue Bestimmung der Schwenkstellung der Tischplatte 3 möglich.

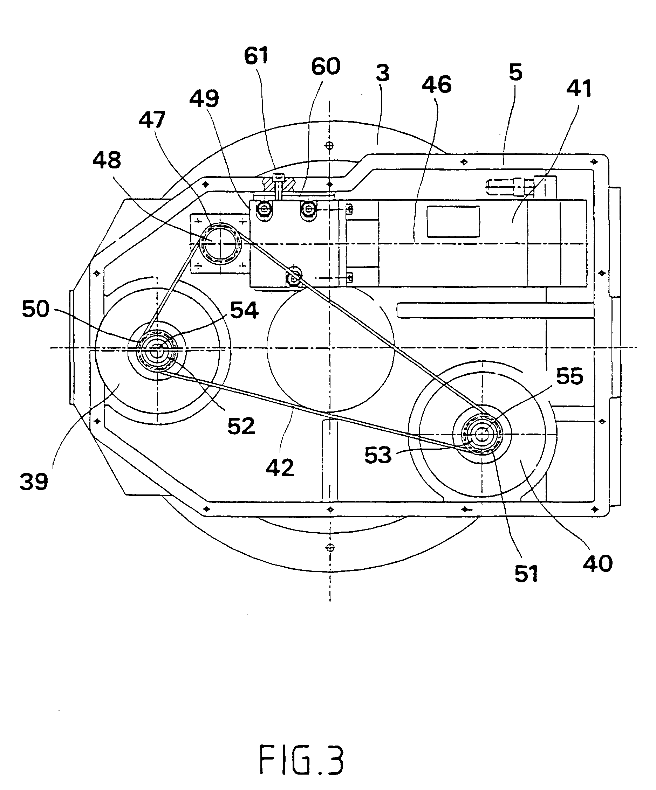

Gemäß Fig. 1 erfolgt auch der Drehantrieb der Tischplatte 3 über zwei am Gehäuse 5 unterhalb der Tischplatte 3 angeordnete Cyclogetriebe 39 und 40, die von einem in Fig. 3 gezeigten Antriebsmotor 41 über einen Zahnriemen 42 gemeinsam angetrieben sind. Die Cyclogetriebe 39 und 40 sind derart angeordnet, daß auf deren Abtriebswellen 43 sitzende Abtriebsritzel 44 gemeinsam in Eingriff mit einem an der Unterseite der Tischplatte 3 konzentrisch zu dessen Drehachse 6 befestigten Zahnring 45 sind. Im Gegensatz zum Antriebsmotor 17, dessen Ausgangswelle 20 parallel zu den Antriebswellen der entsprechenden Cyclogetriebe verläuft, ist der Antriebsmotor 41 aus Platzgründen mit einer um 90° gegenüber den Antriebswellen der Cyclogetriebe 39 und 40 versetzten Motorwelle 46 am Gehäuse 5 unterhalb der Tischplatte 3 befestigt. Die Riemenscheibe 47 für den Zahnriemen 42 sitzt daher auf der Abtriebswelle 48 eines am Antriebsmotor 41 angeflanschten Winkelgetriebes 49, durch das die Drehbewegung des Antriebsmotors 41 um 90° umgelenkt wird. Die Antriebsritzel 50 und 51 sind ebenfalls über lösbare Spannbuchsen 52 bzw. 53 reibschlüssig auf den Antriebswellen 54 und 55 der Cyclogetriebe 39 bzw. 40 befestigt. In den beiden Antriebswellen 54 und 55 sind stirnseitig Stellschrauben 28b eingeschraubt. Die Abtriebswellen 43 sind jeweils in einer Aufnahmebuchse 56 drehfest fixiert, die über ein Rollenlager 57 drehbar im Gehäuse 5 gelagert ist.

Zur Erfassung der Drehstellung der Tischplatte 3 ist an ihrer Unterseite ein zur Drehachse 6 koaxialer Bolzen 58 befestigt, der verdrehfest in der Hohlwelle eines Drehgebers 59 sitzt.

Gemäß Fig. 3 sind der Antriebsmotor 41 und das Winkelgetriebe 50 an einer Halterung 60 befestigt, die zur Vorspannung des Zahnriemens 42 über eine Spannschraube 61 verstellbar ist.

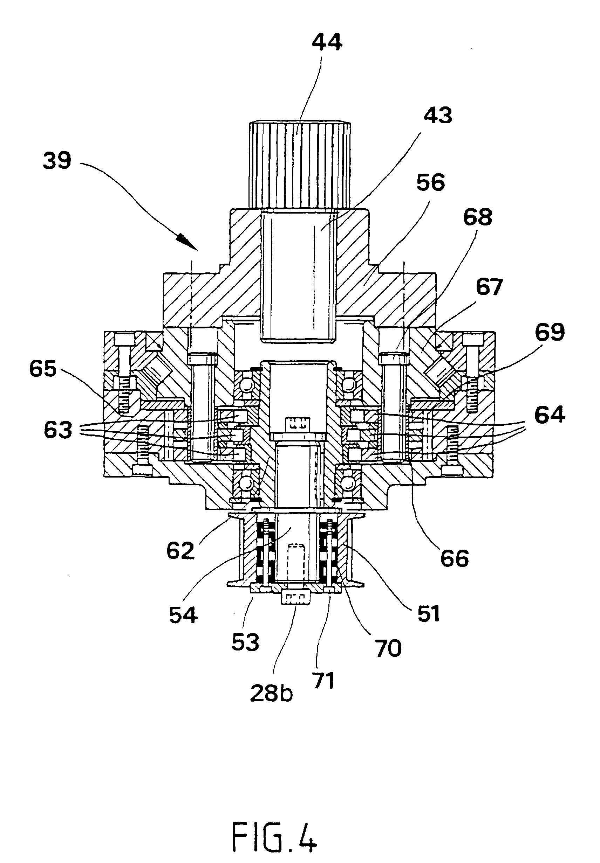

Der Aufbau und das Funktionsprinzip der Cyclogetriebe wird im folgenden anhand von Fig. 4 erläutert, die eine Schnittansicht eines der beiden für den Drehantrieb der Tischplatte 3 verwendeten Cyclogetriebe zeigt. Das Cyclogetriebe 39 enthält einen mit deren Antriebswelle 54 drehfest verbundenen Exzenter 62, der über Rollenlager 63 drei gegeneinander versetzte Kurvenscheiben 64 antreibt. Die Kurvenscheiben 64 weisen ein Außenprofil in Form eines geschlossenen Zykloidenzugs auf und wälzen sich durch Drehung des Exzenters 62 entlang des Innenumfangs eines feststehenden Bolzenrings 65 ab. Die Kurvenscheiben 64 sind mit kreisförmig angeordneten Bohrungen 66 versehen, in die auf einer Mitnehmerscheibe 67 kreisförmig angeordnete Mitnehmerbolzen 68 eingreifen. Jede Kurvenscheibe 64 hat mindestens einen Kurvenabschnitt weniger als Bolzen 69 im Bolzenring 65 sind. Wenn sich die Kurvenscheiben 64 durch Drehung des Exzenters 62 im Uhrzeigersinn innerhalb des Bolzenrings 65 fortbewegen, drehen sie sich gleichzeitig entgegen dem Uhrzeigersinn um ihre eigene Achse. Es entsteht eine Drehbewegung mit einer wesentlich geringeren Drehzahl in entgegengesetzter Richtung. Bei einer vollen Umdrehung des Exzenters 62 wälzt sich jede Kurvenscheibe 64 um einen Kurvenabschnitt weiter. Über die Mitnehmerbolzen 68 wird die reduzierte Drehbewegung der Kurvenscheiben 64 auf die Mitnehmerscheibe 67 übertragen. Auf der Mitnehmerscheibe 67 ist die Aufnahmebuchse 56 aufgeschraubt, in der die Abtriebswelle 43 drehfest fixiert ist. Auf der Abtriebswelle 43 ist das Abtriebsritzel 44 verdrehgesichert befestigt. Das Antriebsritzel 51 ist über die Spannhülse 53 auf der Antriebswelle 54 reibschlüssig gehalten. Die Spannhülse 53 enthält ein mäanderförmiges Element 70 aus Federstahl, das durch Aufbringen einer axialen Vorspannung über Schrauben 71 radial nach innen und außen aufgeweitet wird und so eine reibschlüssige Verbindung zwischen der Antriebswelle 54 und dem Antriebsritzel 51 bildet.

Die Verspannung der beiden Getriebezüge zur spielfreien Einstellung der Antriebsaggregate wird im folgenden anhand des Drehantriebs für die Tischplatte 3 erläutert. Zunächst wird der Zahnriemen 42 durch Verstellung der Einstellschraube 61 gespannt. Dann werden die Spannhülsen 53 zwischen den Antriebswellen 54 und 55 der Cyclogetriebe 39 bzw. 40 und den Antriebsritzeln 45 bzw. 46 gelöst und die Antriebswellen 54 und 55 mit Hilfe der Stellschrauben 28b so weit gegeneinander verdreht, bis die Zahnflanken der auf den Abtriebswellen 43 und 44 angeordneten Abtriebsritzel 45 bzw. 46 an entgegengesetzten Zahnflanken des Zahnrings 47 anliegen. Anschließend werden die Spannhülsen zur Beibehaltung der Verspannung wieder angezogen. In gleicher Weise ist eine spielfreie Einstellung des Schwenkantriebs möglich.

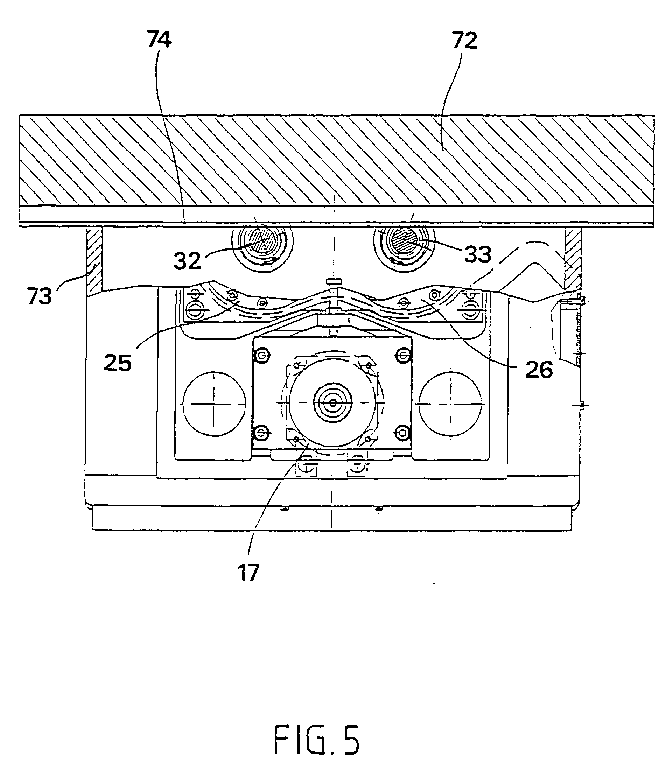

In Fig. 5 ist ein weiteres Ausführungsbeispiel der Erfindung gezeigt, bei dem das Antriebsaggregat zur translatorischen Bewegung eines an einem ortsfesten Bauteil 72, wie z.B. einem Maschinenbett oder einem ortsfesten Ständer, verschiebbar geführten Maschinenteils 73, wie z.B. eines Schlittens, eines Fahrständers, einer Konsole etc., verwendet wird. Der Antrieb ist im wesentlichen wie der in den Fig. 1 und 2 dargestellte Antrieb zum Verschwenken der Tischplatte 3 um die Achse 8 aufgebaut, wobei für die entsprechenden Bestandteile dieselben Bezugszeichen verwendet wurden. Auch bei dieser Ausführung werden die beiden Cyclogetriebe 25 und 26 vom Antriebsmotor 17 über einen Riemen angetrieben. Der Antriebsmotor 17 und die beiden Cyclogetriebe 25 bzw. 26 sind jedoch im Gegensatz zur Ausführung nach Fig. 2 in dem zu bewegenden Maschinenteil 73 eingebaut. Die beiden Abtriebsritzel 32 und 33 stehen mit einer Zahnstange 74 in Eingriff, die am ortsfesten Bauteil 72 angeordnet ist. Durch Drehung des Antriebsmotors 17 kann so das Maschinenteil 73 relativ zum Bauteil 72 verfahren werden. Auch bei dieser Ausführung kann ein besonders reibungsarmer und durch Verspannung spielfreier Vorschubantrieb mit einer hohen Steifigkeit erreicht werden.

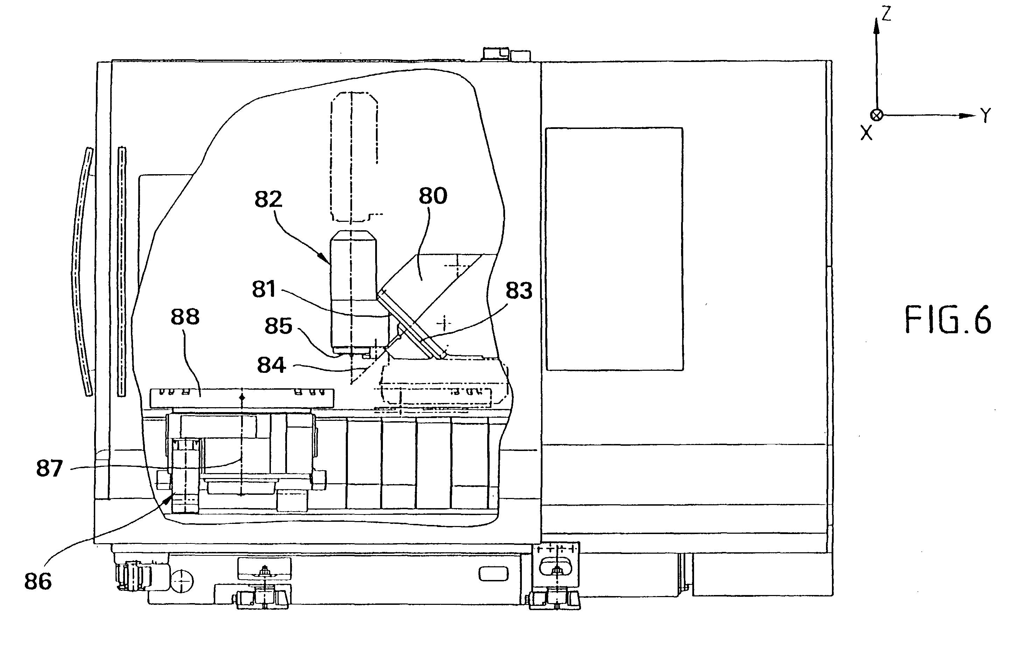

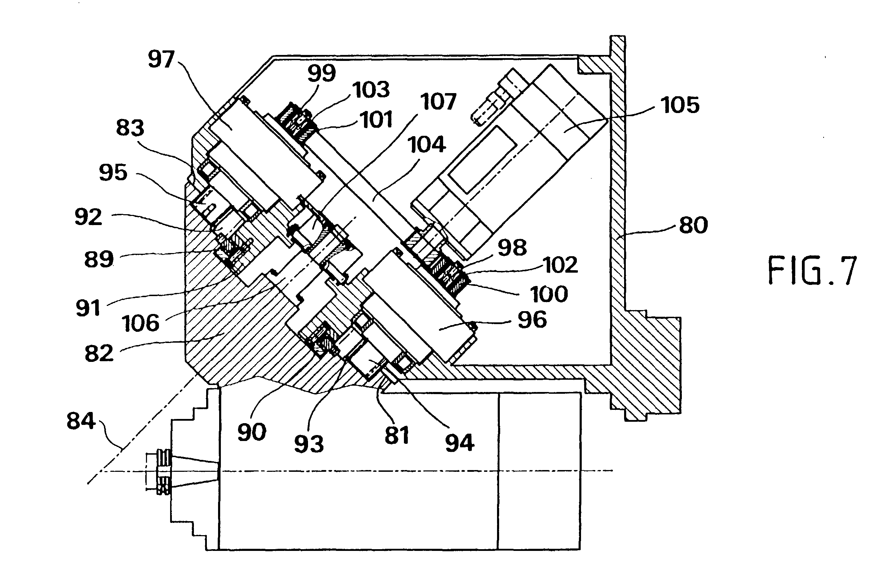

Die in Fig. 6 schematisch gezeigte Universal-Fräs- und Bohrmaschine enthält ein an einem nicht dargestellten Maschinenständer in der X- und Z-Achse verfahrbar geführtes Traggehäuse 80 mit einer gegenüber der Vertikalen um 45° geneigten, schräg nach unten weisenden vorderen Stirnwand 81, an der ein NC-gesteuerter Schwenkfräskopf 82 mit einer ebenfalls unter 45° gegenüber der Vertikalen geneigten Auflagefläche 83 um eine zur Stirnwand 81 senkrechte Schwenkachse 84 (D-Achse) verdrehbar montiert ist. In dem Schwenkfräskopf 82 ist eine unter 45° zur Schwenkachse 84 angeordnete Arbeitsspindel 85 gelagert, deren Antrieb durch einen im Schwenkfräskopf 82 eingebauten Antriebsmotor erfolgt. Über einen im weiteren genauer erläuterten und in Fig. 7 dargestellten Schwenkantrieb ist der Schwenkfräskopf 82 in einem 180°-Bereich zwischen einer in Fig. 6 mit durchgezogenen Linien dargestellten Bearbeitungsstellung mit vertikaler Lage der Arbeitsspindel 85 und einer mit unterbrochenen Linien dargestellten Bearbeitungsstellung mit horizontaler Lage der Arbeitsspindel 85 stufenlos verschwenkbar. Die gezeigte Universal-Fräs- und Bohrmaschine ist ferner mit einem in der Y-Achse horizontal verfahrbaren NC-Rundtisch 86 ausgestattet, der einen um eine Vertikalachse 87 (C-Achse) drehbaren Arbeitstisch 88 aufweist.

Wie aus Fig. 7 hervorgeht, liegt der Schwenkfräskopf 82 mit seiner ringförmigen Auflagefläche 83 an der Stirnwand 81 des Traggehäuses 80 an und wird über eine innere Lagerscheibe 89 geführt, die an ihrem radial äußeren Bereich fest mit dem Schwenkfräskopf 82 verbunden ist und deren radial innerer Bereich über eine Ringlagerung 90 aus zwei axialen und einem radialen Rollenlager auf einem Ringansatz 91 des Traggehäuses 80 gelagert ist. Die Lagerscheibe 89 ist radial innerhalb der Auflagefläche 83 zur Schwenkachse 84 konzentrisch angeordnet. Zwischen der Auflagefläche 83 und der Lagerscheibe 89 ist an dem Schwenkfräskopf 82 ein zu dessen Schwenkachse 84 konzentrischer Zahnring 92 mit einer Außenverzahnung 93 fixiert. In die Außenverzahnung 93 greifen die beiden Abtriebsritzel 94 und 95 zweier im Inneren des Traggehäuses 80 angeordneter Cyclogetriebe 96 bzw. 97 ein.

Die beiden Cyclogetriebe 96 und 97 sind entsprechend dem in Fig. 4 gezeigten und vorstehend ausführlich erläuterten Cyclogetriebe 39 aufgebaut. Bei dem Stellantrieb nach Fig. 7 sind auf den beiden Antriebswellen 98 und 99 der jeweiligen Cyclogetriebe 96 und 97 Antriebsritzel 100 und 101 über lösbare Spannhülsen 102 bzw. 103 reibschlüssig fixiert. Die beiden Antriebsritzel 100 und 101 werden über einen gemeinsamen Zahnriemen 104 von einem Antriebsmotor 105 programmgesteuert angetrieben.

An dem Schwenkfräskopf 82 ist ein in das Traggehäuse ragender Bolzen 106 koaxial zur Schwenkachse 84 befestigt, der zur Erfassung der Schwenkstellung des Schwenkfräskopfs 82 verdrehfest in einer Hohlwelle eines Drehgebers 107 angeordnet ist.

Auch bei diesem Schwenkantrieb kann durch eine einfach durchzuführende Verspannung der beiden Getriebezüge ein spielfreier Antrieb erreicht werden. Hierzu müssen zunächst die beiden Spannhülsen 102 und 103 bei gespanntem Zahnriemen 104 gelöst und die beiden Antriebswellen 98 und 99 bei feststehenden Antriebsritzeln 100 und 101 so weit gegeneinander verdreht werden, bis die Zähne der beiden Abtriebsritzel 94 und 95 an entgegengesetzten Zahnflanken des Zahnrings 92 anliegen. Anschließend können die Spannhülsen 102 und 103 unter Beibehaltung der Vorspannung erneut festgespannt werden.

In Fig. 7 sind die beiden Cyclogetriebe in einer diametral gegenüberliegenden Anordnung gezeigt. Dies stellt allerdings nur eine mögliche Ausführungsform dar. Die beiden Cyclogetriebe können z.B. auch am oberen oder unteren Umfangsbereich des Zahnrings 92 nebeneinanderliegend angeordnet sein.

Durch Einsatz des erfindungsgemäßen Antriebsaggregats als Schwenkantrieb für einen Fräskopf ist eine spielfreie und stufenlose, numerisch gesteuerte Drehung des Schwenkfräskopfes auch während der Bearbeitung möglich. Eine Zerspanung ist in jeder Lage innerhalb des vorgegebenen Schwenkbereichs durchführbar. Es sind keine aufwendigen Klemmeinrichtungen für die Fixierung des Schwenkfräskopfs in vorgegebenen Bearbeitungsstellungen erforderlich. Zusammen mit dem NC-Rundtisch ist bei der in Fig. 6 gezeigten Universal-Fräs- und Bohrmaschine eine 5-Achs-Simultanbearbeitung besonders zur Durchführung von anspruchsvollen und komplexen Bearbeitungsaufgaben möglich.

Die Erfindung ist nicht auf die dargestellten und vorstehend beschriebenen Ausführungsbeispiele beschränkt, sondern kann außer bei Drehtischen, Schwenkfräsköpfen und Vorschubschlitten oder Fahrständern von Werkzeugmaschinen auch überall dort eingesetzt werden, wo zu bewegende Bauelemente bei geringem Platzbedarf mit hoher Genauigkeit und Steifigkeit angetrieben werden sollen. So ist das erfindungsgemäße Antriebsaggregat auch zum Antrieb von Teileinrichtungen, Werkzeugmagazinen, Werkzeugwechslern oder für hochgenaue Robotersysteme verwendbar.

## Patentansprüche

1. Antriebsaggregat zur Relativbewegung zweier Bauteile, insbesondere einer Werkzeugmaschine, mit einem Antriebsmotor (17; 41; 105) und einer Getriebeanordnung mit zwei gegeneinander verspannbaren Getriebezügen, deren Abtriebsritzel (32, 33; 44; 94, 95) gemeinsam mit einer Verzahnung (34; 45; 93) am anderen Bauteil (5; 3; 82) in Eingriff sind, wobei jeder Getriebezug ein hochübersetzendes Kompaktgetriebe (25, 26; 39, 40; 96, 97) mit mindestens einem Stellelement (27; 52, 53; 102, 103) zum Verspannen der beiden Getriebezüge enthält,
**dadurch gekennzeichnet,**
**daß** die Kompaktgetriebe (25, 26; 39, 40; 96, 97) Cyclogetriebe sind,
**daß** die Antriebswellen (24; 54, 55; 98, 99) der beiden Cyclogetriebe über einen gemeinsamen Zahnriemen (22; 42; 104) angetrieben sind und
**daß** die Stellelemente (27; 52, 53; 102, 103) als lösbare Spannhülsen zur reibschlüssigen Fixierung von Antriebsritzeln (23; 50, 51; 100, 101) auf den Antriebswellen (24; 54, 55; 98, 99) ausgebildet sind.

2. Antriebsaggregat nach Anspruch 1, **dadurch gekennzeichnet, daß** die Abtriebsritzel (32, 33) der beiden Getriebezüge in Eingriff mit einem Zahnradsegment (34) an einem verschwenkbaren Gehäuse (5) sind, auf dem eine Tischplatte angeordnet ist.

3. Antriebsaggregat nach Anspruch 1, **dadurch gekennzeichnet, daß** die Abtriebsritzel (44) der beiden Getriebezüge in Eingriff mit einem Zahnkranz (45) sind, der an einer drehbar gelagerten Tischplatte (3) angeordnet ist.

4. Antriebsaggregat nach Anspruch 1, **dadurch gekennzeichnet, daß** die Abtriebsritzel (94, 95) der beiden Getriebezüge in Eingriff mit einem Zahnring (92) sind, der an einem Schwenkfräskopf (82) angeordnet ist.

5. Antriebsaggregat nach einem der Ansprüche 1 bis 4, **dadurch gekennzeichnet, daß** ein Drehgeber (38; 59; 107) zur Erfassung der Winkellage des anzutreibenden Bauteils (5; 3; 82) vorgesehen ist.

6. Antriebsaggregat nach Anspruch 1, **dadurch gekennzeichnet daß** die Verzahnung an einer Zahnstange (74) ausgebildet ist.

7. Antriebsaggregat nach Anspruch 6, **dadurch gekennzeichnet, daß** der Antriebsmotor (17) und die beiden Cyclogetriebe (25, 26) an einem zu bewegenden Bauteil (73) und die Zahnstange (74) an einem ortsfesten Bauteil (72) angeordnet sind.

8. Antriebsaggregat nach Anspruch 6, **dadurch gekennzeichnet, daß** der Antriebsmotor (17) und die beiden Cyclogetriebe (25, 26) an einem ortsfesten Bauteil und die Zahnstange (74) an einem zu bewegenden Bauteil angeordnet sind.

9. Antriebsaggregat nach einem der Ansprüche 1 bis 8, **dadurch gekennzeichnet, daß** an den Antriebswellen (24; 54, 55; 98, 99) jeweils ein Aufnahmeelement (28a, 28b) zum Einsetzen eines entsprechend ausgebildeten Verdrehwerkzeugs angeordnet ist.

10. Antriebsaggregat nach einem der Ansprüche 1 bis 9, **dadurch gekennzeichnet, daß** die Cyclogetriebe (25, 26; 39, 40; 96, 97) jeweils eine mit deren Mitnehmerscheibe (67) drehfest verbundene Aufnahmebuchse (56) umfassen, in der die über Lager (29; 57) abgestützte Abtriebswelle (30; 43) drehfest fixiert ist.

## Claims

1. A driving unit for the relative movement of two structural parts of a machine tool with a driving motor (17, 41, 105) and a gear arrangement with two gear trains which can be mutually offset, whose power takeoff pinions (32, 33, 44, 94, 95) mesh together with a teething (34,45,93) on the other structural part (5, 3, 82), where each gear train comprises a high gear ratio compact gear (25, 26, 39, 40, 96, 97), with at least one adjustment element (27, 52, 53, 102, 103) for offsetting the two gear trains, **characterised by** the fact that the compact gears (25, 26, 39, 40, 96, 97) are cycloid gears, that the driving shafts (24, 54, 55, 98, 99) of the two cycloid gears are driven by a common toothed belt (22, 42, 104) and that the adjustment elements (27, 52, 53, 102, 103) are formed as separable adapter sleeves for frictional fixing of driving pinions (23, 50, 51, 100, 101) to the driving shafts (24, 54, 55, 98, 99).

2. A driving unit according to Claim 1, **characterised by** the fact that the power takeoff pinions (32, 33) of the two gear trains mesh with a gear segment (34) on a housing (5) able to be swivelled, on which a tabletop is arranged.

3. A driving unit according to Claim 1, **characterised by** the fact that the power takeoff pinions (44) of both gear trains, mesh with a gear rim (45) which is arranged on a rotationally supported tabletop (3).

4. A driving unit according to Claim 1, **characterised by** the fact that the power takeoff pinions (94, 95) of the two gear trains mesh with a toothed ring (92) arranged on a swivelling milling swivel (82).

5. A driving unit according to one of the Claims from 1 to 4, **characterised by** the fact that a shaft encoder (38, 59, 107) is provided for the acquisition of the relative position of the driven structural part (5, 3, 82).

6. A driving unit according to Claim 1, **characterised by** the fact that the teething is formed on a toothed rod (74).

7. A driving unit according to Claim 6, **characterised by** the fact that the driving motor (17) and the two cycloid gears (25, 26) are arranged on a moving structural part (73) and the toothed rod (74) on a fixed structural part (72).

8. A driving unit according to Claim 6, **characterised by** the fact that the driving motor (17) and the two cycloid gears (25, 26) are arranged on a fixed structural part and the toothed rod (74) on a moving structural part.

9. A driving unit according to one of the Claims from 1 to 8, **characterised by** the fact that reception sockets (28a, 28b) for receiving an appropriately shaped rotation tool are arranged on the driving shafts (24, 54, 55, 98, 99)

10. A driving unit according to one of the Claims from 1 to 9, **characterised by** the fact that the cycloid gears (25, 26, 39, 40, 96, 97) comprise a reception sleeve (56), which is non-rotationally linked to their driving plate (67), in which a driving shaft (30, 43) supported by bearings (29, 57) is non-rotationally fixed.

## Revendications

1. Ensemble d'entraînement pour le mouvement relatif de deux éléments, en particulier d'une machine outils, avec un moteur d'entraînement (17 ; 41 ; 105) et un dispositif d'engrenages comportant deux trains d'engrenages qui peuvent être décalés, à l'opposé, dont les pignons actionnés (32, 33 ; 44 ; 94, 95), ensemble, sont en prise avec un engrenage (34 ; 45 ; 93) situé sur l'autre élément (5 ; 3 ; 82), chaque train d'engrenage comportant un engrenage compact fortement multiplicateur (25, 26 ; 39, 40 ; 96, 97) doté d'au moins un élément de réglage (27 ; 52, 53 ; 102, 103) pour décaler les deux trains d'engrenage,
**caractérisé en ce que**
les engrenages compacts (25, 26 ; 39, 40 ; 96, 97) sont des engrenages cycliques, que les arbres d'entraînement (24 ; 54, 55 ; 98, 99) des deux engrenages cycliques sont entraînés par le biais d'une courroie dentée commune (22 ; 42 ; 104) et que les éléments de réglage (27 ; 52, 53 ; 102, 103) sont conçus sous forme de manchons de serrage pour la fixation par friction des pignons d'entraînement (23 ; 50, 51 ; 100, 101) sur les arbres d'entraînement (24 ; 54, 55 ; 98, 99).

2. Ensemble d'entraînement conformément à la revendication 1, **caractérisé en ce que** les pignons actionnés (32, 33) des deux trains d'engrenages sont en prise avec un segment de roue dentée (34) située sur un logement basculant (5) sur lequel est disposée une table.

3. Ensemble d'entraînement conformément à la revendication 1, **caractérisé en ce que** les pignons actionnés (44) des deux trains d'engrenage sont en prise avec une couronne dentée (45), disposée sur une table rotative (3).

4. Ensemble d'entraînement conformément à la revendication 1, **caractérisé en ce que** les pignons actionnés (94, 95) des deux trains d'engrenages sont en prise avec un anneau denté (92), disposé sur une tête porte-lames oscillante (82).

5. Ensemble d'entraînement selon l'une des revendications 1 à 4, **caractérisé en ce qu'**un encodeur (38 ; 59 ; 107) est prévu pour saisir la position relative de l'élément à entraîner (5 ; 3 ; 82).

6. Ensemble d'entraînement conformément à la revendication 1, **caractérisé en ce que** l'engrenage est formé sur une crémaillère (74).

7. Ensemble d'entraînement conformément à la revendication 6, **caractérisé en ce que** le moteur d'entraînement (17) et les deux engrenages cycliques (25, 26) sont disposés sur un élément mobile (73) et la crémaillère (74) sur un élément fixe (72).

8. Ensemble d'entraînement conformément à la revendication 6, **caractérisé en ce que** le moteur d'entraînement (17) et les deux engrenages cycliques (25, 26) sont disposés sur un élément fixe et la crémaillère (74) sur un élément mobile.

9. Ensemble d'entraînement selon l'une des revendications 1 à 8, **caractérisé en ce que** respectivement un élément de réception (28a, 28b) est disposé sur les arbres d'entraînement (24 ; 54, 55 ; 98, 99) pour mettre en oeuvre un outil rotatif conçu de manière correspondante.

10. Ensemble d'entraînement selon l'une des revendications 1 à 9, **caractérisé en ce que** les deux engrenages cycliques (25, 26 ; 39, 40 ; 96, 97) comprennent respectivement un manchon de réception (56), qui est relié de manière à résister à la rotation à leur disque d'entraînement (67), dans lequel est fixé de manière à résister à la rotation l'arbre d'entraînement (30 ; 43), soutenu par le biais de paliers (29 ; 57).
